# FASCICULE DE BREVET EUROPEEN

(11) **EP 2 823 608 B1**
(45) Date de publication et mention de la délivrance du brevet: **02.03.2016**
(21) Numéro de dépôt: 13711845.1
(22) Date de dépôt: 05.03.2013
(51) Int. Cl.: H04L 12/751, H04L 12/761, H04L 12/753

(54) **PROCÉDÉ, DISPOSITIF ET PROGRAMME D'ORDINATEUR POUR SÉLECTIONNER UN NOEUD ROUTEUR DANS UN RÉSEAU LLN**
VERFAHREN, VORRICHTUNG UND COMPUTERPROGRAMM ZUR AUSWAHL EINES ROUTERKNOTENS IN EINEM LLN-NETZWERK
METHOD, DEVICE AND COMPUTER PROGRAM FOR SELECTING A ROUTER NODE IN AN LLN NETWORK

(30) Priorité: 07.03.2012 FR 1252076
(43) Date de publication de la demande: 14.01.2015
(73) Titulaire: Commissariat à l'Énergie Atomique et aux Énergies Alternatives, 75015 Paris (FR)
(72) Inventeur: JANNETEAU, Christophe, F-28210 Chaudon (FR); KELLIL, Mounir, F-91300 Massy Palaiseau (FR); RIOU, Nicolas, F-38240 Meylan (FR)
(74) Mandataire: Brevalex
(86) Numéro de dépôt international: PCT/EP2013/054321
(87) Numéro de publication internationale: WO 2013/131871

(56) Documents cités:
- US-A1- 2009 232 031
- WINTER T ET AL: "RPL: IPv6 Routing Protocol for Low power and Lossy Networks; draft-ietf-roll-rpl-19.txt", RPL: IPV6 ROUTING PROTOCOL FOR LOW POWER AND LOSSY NETWORKS; DRAFT-IETF-ROLL-RPL-19.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 19, 14 mars 2011 (2011-03-14), pages 1-163, XP015074831,
- VAN DER STOK P ET AL: "Multicast requirements for control over LLN; draft-vanderstok-roll-mcreq-00.txt", MULTICAST REQUIREMENTS FOR CONTROL OVER LLN; DRAFT-VANDERSTOK-ROLL-MCREQ-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 27 février 2012 (2012-02-27), pages 1-10, XP015080840,

## Description

### DOMAINE TECHNIQUE

L'invention se situe dans le contexte de multidiffusion (*multicast*) dans des réseaux informatiques à fortes contraintes en termes de ressources disponibles (batteries, mémoires, capacités de calcul, liens disponibles, etc.) et concerne plus spécifiquement un procédé de sélection d'un noeud routeur dans un réseau de télécommunications de type LLN (Low power and Lossy Network) par exemple comportant une pluralité de noeuds susceptibles d'agir comme routeurs de paquets de données en provenance ou à destination d'au moins un noeud hôte appartenant à un groupe de noeuds multicast susceptibles d'émettre et/ou de recevoir des paquets de données à travers ledit réseau LLN, ce dernier comportant en outre un noeud racine comportant une première table destinée à mémoriser des associations entre au moins un noeud routeur et au moins un noeud hôte d'un groupe multicast.

L'invention concerne également un dispositif et un programme d'ordinateur aptes à mettre en oeuvre le procédé selon l'invention.

### ÉTAT DE LA TECHNIQUE ANTÉRIEURE

La duplication des paquets de données échangés lors de communications de type multicast dans des réseaux de type LLN (Low power and Lossy Network) a pour effet d'engendrer un gaspillage des ressources telle que la bande passante, la capacité de calcul, l'espace mémoire et la réserve d'énergie qui sont, par essence, très limitées dans ce type de réseaux. Ce gaspillage peut provoquer un dysfonctionnement important du réseau, son vieillissement prématuré, voire son blocage complet.

Ce problème survient lorsqu'un paquet multicast est transmis/diffusé dans une trame niveau 2 (niveau lien du modèle OSI ; par exemple niveau MAC (pour Media Access Control)) de type broadcast, ce qui est souvent le cas dans les réseaux informatiques y compris dans les réseaux LLNs.

Dans le contexte d'un réseau RPL (Routing Protocol for Low power and Lossy Networks) par exemple, les paquets dupliqués peuvent provenir d'un noeud qui diffuse des paquets de données multicast sans respecter la logique de transfert d'un noeud RPL, c'est à dire, sans transférer le paquet multicast dans une trame unicast (de niveau 2) vers un, voire plusieurs noeud(s) voisin(s) déterminé(s). Ceci arrive si, par exemple, le noeud en question est à portée radio d'un réseau RPL mais ne fait pas partie à proprement parler de ce réseau RPL. Cette situation correspond au cas où le noeud n'a pas d'information sur les noeuds du réseau RPL, ou n'implémente pas les fonctionnalités RPL. Un tel noeud peut être, par exemple, un noeud sans batterie et récupérant l'énergie nécessaire à la transmission d'un message, par exemple, d'une commande à travers une action physique extérieure subie par le noeud tel un noeud de type ZigBee GreenPower (interrupteur sans-fil et sans batterie).

Dans le cas d'une source multicast, celle-ci peut envoyer un paquet IP multicast sur une trame niveau 2 de type Broadcast qui sera reçue par tous les routeurs RPL en portée radio directe de cette source. S'il s'agit d'un paquet multicast de type multi-sauts, une transmission de proche-en-proche sera effectuée (au niveau 2, cela pourrait se faire en unicast ou en broadcast) jusqu'à ce que le paquet atteigne sa destination finale. Cependant, si le paquet IP multicast émis par la source est reçu par plusieurs routeurs RPL en portée radio directe de ladite source, chacun de ces routeurs transmettra dans le réseau une copie dudit paquet. Cette situation est alors à l'origine de duplications dudit paquet dans le réseau RPL puisque ce même paquet est injecté simultanément et de manière indépendante dans l'arbre de routage RPL par plusieurs noeuds. Ainsi, un noeud sur le trajet des paquets qui peut être soit un routeur intermédiaire soit la destination finale des paquets, risque de recevoir plusieurs copies des mêmes paquets multicast, ce qui peut engendrer nombre de problèmes tels que par exemple la surconsommation de la bande passante du réseau ou encore son vieillissement prématuré.

Le cas d'un noeud destinataire des paquets est assez similaire à celui de la source en termes d'effets sur le réseau, sauf que le but du noeud destinataire est de recevoir des paquets multicast et non pas d'en émettre. Pour ce faire, le noeud destinataire transmet dans une trame broadcast (de niveau 2) sa requête d'adhésion à un groupe multicast IP dans un réseau RPL, par exemple une requête de type MLD report |R. Vida et al. « Multicast Listener Discovery » Version 2 (MLDv2) for IPv6 », RFC 3610, June 2004]). Même si la requête du noeud destinataire a une portée locale au sens IP (*link_local scope*), elle peut être prise en compte par plusieurs routeurs RPL en portée radio directe du noeud destinataire. Dans ce cas, tout routeur RPL ayant reçu ladite requête, initiera la construction d'un chemin de routage consistant en une branche d'un arbre multicast allant du réseau RPL vers le noeud destinataire. Par conséquent le noeud destinataire risque de recevoir autant de copies d'un même paquet IP multicast qu'il y a de routeurs RPL à portée directe du noeud destinataire. Là encore cette duplication du trafic dans le réseau RPL peut engendrer nombre de problèmes tels que par exemple la surconsommation de la bande passante du réseau ou son vieillissement prématuré.

Dans le document US2009/0232031, un noeud externe à un groupe multicast est ajouté sans aucune restriction au groupe. Cette solution ne permet donc pas d'éviter la duplication des paquets de données échangés.

Le but de l'invention est de pallier les inconvénients de l'art antérieur décrit ci-dessus.

### EXPOSÉ DE L'INVENTION

Ce but est atteint au moyen d'un procédé de sélection d'un noeud routeur dans un réseau de télécommunications de type LLN (Lower power and Lossy channel Network), par exemple, comportant une pluralité de noeuds routeurs susceptibles d'agir comme routeurs de paquets de données en provenance ou à destination d'au moins un noeud hôte appartenant à un groupe de noeuds multicast susceptibles d'émettre et/ou de recevoir des paquets de données à travers ledit réseau, et un noeud racine comportant une première table destinée à mémoriser des associations entre au moins un noeud routeur et au moins un noeud hôte d'un groupe multicast.

Le procédé selon l'invention comporte les étapes suivantes:
- à la réception par un noeud routeur d'un paquet de données multicast provenant d'un noeud hôte ou d'une requête d'adhésion à un groupe multicast provenant d'un noeud hôte, ledit noeud routeur transmet au noeud racine une requête MER_Request (pour Multicast Edge Router Request) de configuration en tant que noeud routeur multicast pour servir ledit noeud hôte, et,
- à la réception de la requête MER_Request, le noeud racine détermine à partir de ladite première table d'association une configuration du noeud routeur et,
- transmet audit noeud routeur un message de réponse MER_Reply comportant la configuration déterminée.

La requête MER_Request est par exemple un message de type DAO (pour Destination Avertissement Object).

Préférentiellement, la requête MER_Request comporte l'adresse dudit noeud hôte, et le message de réponse MER_Reply comporte l'adresse dudit noeud hôte, et une durée de la configuration déterminée pour le noeud routeur vis-à-vis du noeud hôte.

Optionnellement, la requête MER_Request comporte l'adresse du groupe multicast auquel est associé ledit noeud hôte.

Selon l'invention, la configuration du noeud routeur consiste à lui attribuer l'un des statuts suivants:
- PENDING : indiquant que ledit noeud routeur est en attente d'être configuré par le noeud racine,
- MER (Multicast Edge Router): indiquant que ledit noeud routeur est configuré en tant qu'unique routeur multicast pour le noeud hôte,
- NON_MER: indiquant que le noeud routeur n'est pas configuré en tant que routeur multicast pour le noeud hôte.

Dans un mode préféré de réalisation, le procédé selon la revendication comporte en outre une étape consistant à configurer dans chaque noeud routeur une deuxième table d'association comportant les informations suivantes :
- l'adresse du noeud hôte source du paquet de données multicast ou de la requête d'adhésion à un groupe multicast reçu par le noeud routeur;
- un statut du noeud routeur vis-à-vis dudit noeud hôte parmi l'un des statuts PENDING, MER, ou NON_MER.
- une durée de vie du statut du noeud routeur vis-à-vis du noeud hôte.

Ladite deuxième table d'association comporte en outre les informations suivantes :
- le type du noeud hôte indiquant si le noeud hôte est source des paquets de données multicast reçus par le noeud routeur ou destinataire des paquets de données multicast reçus par le noeud routeur (c.à.d. source d'une requête d'adhésion au groupe multicast);
- l'adresse du groupe multicast auquel est associé le noeud hôte.

Notons que la fonction du noeud routeur MER vis-à-vis d'un noeud hôte varie selon les informations contenues dans la deuxième table d'association dudit noeud hôte. Plus précisément cette fonction se décline selon quatre variantes possibles qui dépendent de l'utilisation ou non des champs optionnels [type de l'hôte] et [adresse multicast] dans les échanges MER_Request/Reply et les diagrammes d'état au niveau des noeuds routeurs et du noeud racine.
- Cas 1 : les champs [type de l'hôte] et [adresse multicast] ne sont PAS utilisés : dans ce cas, un noeud routeur avec statut MER vis-à-vis d'un noeud hôte signifie que ce noeud routeur est configuré comme routeur multicast pour ce noeud hôte, pour tout groupe multicast et quel que soit le rôle du noeud hôte dans chacun de ces groupes (source et/ou destination des paquets de données). Ainsi, par exemple, si le statut MER a été configuré suite à une demande d'adhésion à un groupe multicast #1 par le noeud hôte (cas d'un noeud hôte « destinataire ») le même noeud routeur avec statut MER servira aussi (automatiquement) de routeur multicast pour ce noeud hôte s'il est source d'un autre groupe multicast #2...une interaction avec le noeud racine via des messages MER_Request/Reply n'est alors pas nécessaire pour ce second groupe multicast.
- Cas 2 : les champs [type de l'hôte] et [adresse multicast] sont utilisés tous les deux: dans ce cas, un noeud routeur avec statut MER vis-à-vis d'un noeud hôte signifie que ce noeud routeur est configuré comme routeur multicast pour ce noeud hôte pour le groupe multicast dont l'adresse est contenue dans le champ [adresse multicast] et pour un rôle donné, source ou destination des paquets de données, de ce noeud hôte vis-à-vis de ce groupe multicast. Ainsi, il est potentiellement possible dans ce cas qu'un noeud hôte soit servi par différents noeuds routeurs MER pour des groupes multicast et/ou des rôles (source/destination) du noeud hôte différents.

- Cas 3 : le champ [type de l'hôte] n'est pas utilisé mais le champ [adresse multicast] est utilisé: dans ce cas, un noeud routeur avec statut MER vis-à-vis d'un noeud hôte signifie que ce noeud routeur est configuré comme routeur multicast pour ce noeud hôte pour le groupe multicast donné dont l'adresse est contenue dans le champ [adresse multicast] et ce quel que soit le rôle (source et/ou destination des paquets de données) du noeud hôte vis-à-vis de ce groupe multicast.
- Cas 4 : le champ [type de l'hôte] est utilisé mais le champ [adresse multicast] n'est pas utilisé : dans ce cas, un noeud routeur avec statut MER vis-à-vis d'un noeud hôte signifie que ce noeud routeur est configuré comme routeur multicast pour ce noeud hôte pour tout groupe multicast mais uniquement pour un rôle donné, source ou destination des paquets de données, du noeud hôte vis-à-vis de ce groupe multicast.

Dans une première variante de mise en oeuvre du procédé selon l'invention, lorsque le noeud hôte est source des paquets de données reçus par un noeud routeur ayant un statut MER vis-à-vis dudit noeud hôte, ce noeud routeur intercepte tous les paquets multicast émis par ledit noeud hôte et les re-route dans le réseau, et lorsque le noeud hôte est destinataire des paquets de données reçus par ledit noeud routeur, ce dernier intercepte les requêtes d'adhésion à un groupe multicast émises par ledit noeud hôte et déclenche la création, pour ledit groupe multicast, d'une branche de routage multicast dans ledit réseau.

Le procédé selon l'invention comporte en outre une étape de gestion de ladite deuxième table d'association dans laquelle, à la réception par le noeud routeur d'un paquet de données multicast comportant une adresse d'un nouveau noeud hôte source de paquets de données, ledit noeud routeur :
- enregistre dans ladite deuxième table d'association l'adresse dudit nouveau noeud hôte, une valeur PENDING pour le statut du noeud routeur vis-à-vis de ce nouveau noeud hôte, et une valeur non nulle pour la durée de vie du statut du noeud routeur vis-à-vis du nouveau noeud hôte,
- génère un message MER_Request comportant l'adresse du nouveau noeud hôte, et optionnellement l'adresse du groupe multicast auquel est associé ce nouveau noeud hôte et le type du noeud hôte vis-à-vis du groupe multicast (dans ce cas de type «source »), et,
- transmet le message MER_Request généré au noeud racine.

Et, à la réception par le noeud routeur d'une requête d'adhésion à un groupe multicast provenant d'un nouveau noeud hôte, ledit noeud routeur :
- enregistre dans ladite deuxième table d'association l'adresse du nouveau noeud hôte, une valeur PENDING pour le statut dudit noeud routeur vis-à-vis de ce nouveau noeud hôte et une valeur non nulle pour la durée de vie du statut du noeud routeur vis-à-vis du nouveau noeud hôte,
- génère un message MER_Request comportant l'adresse du nouveau noeud hôte, et optionnellement l'adresse du groupe multicast auquel ce nouveau noeud hôte souhaite s'inscrire et le type du noeud hôte vis-à-vis du groupe multicast (dans ce cas de type « destination »), et,
- transmet le message MER_Request généré au noeud racine.

Dans les deux cas, le noeud routeur stocke le paquet (données ou requête d'adhésion) reçu en attendant une réponse MER_Reply du noeud racine si sa mémoire disponible le permet.

Selon une autre caractéristique du procédé de l'invention, dans le cas où le noeud routeur reçoit un message de réponse MER_Reply comportant un statut NON_MER, ledit noeud routeur :
- vérifie s'il existe dans la deuxième table d'association un noeud hôte concerné par le message de réponse MER_Reply reçu;
- Si oui, met son statut vis-à-vis du noeud hôte concerné à NON_MER, et,
- remplace la valeur de la durée de vie du statut du noeud routeur vis-à-vis du noeud hôte concerné par celle indiquée dans le message MER_Reply reçu.

Par ailleurs, si le noeud hôte concerné par le message MER_Reply est source du paquet de données reçu par le noeud routeur, ce dernier supprime de sa mémoire les paquets de données préalablement stockés pendant la phase d'attente de la réponse MER_Reply, et si ledit noeud hôte est destinataire du paquet de données reçu par le noeud routeur, ce dernier supprime le message reçu du noeud destinataire préalablement stocké (c.à.d. il supprime la requête d'adhésion au groupe multicast).

Si le noeud routeur reçoit un message de réponse MER_Reply comportant un statut MER ledit noeud routeur :
- vérifie s'il existe dans la deuxième table d'association une entrée avec un noeud hôte concerné par le MER_Reply reçu,
- Si oui, ledit noeud routeur met son statut vis-à-vis du noeud hôte concerné à MER, et,
- remplace la durée de vie du statut du noeud routeur vis-à-vis du noeud hôte concerné par celle indiquée dans le message MER_Reply reçu.

Et, si le noeud hôte concerné par le message MER_Reply est source du paquet de données reçu par le noeud routeur, ce dernier re-route lesdits paquets à travers le réseau, et si ledit noeud hôte est destinataires desdits paquets, (c.à.d. lorsque le noeud routeur reçoit dudit noeud hôte une requête d'adhésion à un groupe multicast, le noeud routeur établit avec le réseau une branche multicast qui véhiculera les paquets multicast à destination dudit noeud hôte.

Par contre, si aucun noeud hôte de la deuxième table d'association n'est concerné par le message de réponse MER_Reply transmis par le noeud racine, ledit noeud routeur ignore le message reçu du noeud racine.

Dans tous les cas, le noeud routeur supprime l'entrée correspondant au message MER_Reply de la deuxième table d'association lorsque la durée de vie de son statut vis-à-vis d'un noeud hôte expire.

Le procédé selon l'invention comporte en outre une étape de gestion de ladite première table d'association dans laquelle, du côté du noeud racine, à la réception par ce noeud racine du message MER_Request, ledit noeud racine vérifie si le message reçu correspond à une entrée préalablement mémorisée dans la première table d'association et, si le message provient d'un noeud routeur différent de celui qui est inscrit pour ladite entrée, le noeud racine envoie audit noeud routeur un message MER_Reply comportant les mêmes informations que celles mentionnées dans le message MER_Request avec un statut NON_MER pour ce routeur vis-à-vis du noeud hôte mentionné dans le message reçu, et la durée de vie restante de ladite entrée.

Selon une autre caractéristique du procédé de l'invention, pour la gestion de ladite première table d'association, si le message MER_Request reçu par le noeud racine ne correspond à aucune entrée préalablement mémorisée dans la première table d'association, ledit noeud racine ajoute une nouvelle entrée dans ladite première table d'association comportant, outre les informations contenues dans le message MER_Request, une durée de vie non nulle pour l'entrée ajoutée et un statut MER pour le noeud routeur vis-à-vis du noeud hôte mentionné dans le message reçu, ainsi que l'adresse dudit noeud routeur MER..

Le procédé selon l'invention est mis en oeuvre par un dispositif de sélection d'un noeud routeur dans un réseau de télécommunications de type LLN (Low power and Lossy Network), par exemple, comportant une pluralité de noeuds routeurs susceptibles d'agir comme routeurs de paquets de données en provenance ou à destination d'au moins un noeud hôte appartenant à un groupe multicast susceptible d'émettre et/ou de recevoir des paquets de données à travers ledit réseau, un noeud racine comportant une première table destinée à mémoriser des associations entre au moins un noeud routeur et au moins un noeud hôte du groupe multicast.

Selon l'invention, chaque noeud routeur de ce dispositif est apte à transmettre au noeud racine une requête MER_Request (pour Multicast Edge Router Request) de configuration en tant que noeud routeur, et, le noeud racine de ce dispositif est apte à déterminer à partir de ladite première table d'association une configuration du noeud routeur et à transmettre audit noeud routeur un message de réponse MER_Reply comportant la configuration déterminée.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 illustre schématiquement les étapes du procédé selon l'invention exécutées au niveau d'un noeud routeur dans un réseau LLN pour configurer ce noeud routeur.
- la figure 2 illustre schématiquement les étapes du procédé selon l'invention exécutées au niveau du noeud racine d'un réseau LLN pour configurer un noeud routeur dans ce réseau.
- la figure 3 illustre la séquence d'échange de messages entre des noeuds RPL, des noeuds hôtes sources de paquets de données, et le noeud racine pour la sélection d'un routeur dans un réseau RPL selon l'invention ;
- la figure 4 illustre la séquence d'échange de messages entre des noeuds RPL, des noeuds hôtes destinataires de paquets de données, et le noeud racine pour la sélection d'un routeur dans un réseau RPL selon l'invention.

### EXPOSÉ DÉTAILLÉ DE MODES DE RÉALISATION PARTICULIERS

L'invention sera décrite lorsqu'elle est appliquée dans un réseau LLN (pour *Low power and Lossy Network*) comportant une pluralité de noeuds RPL (pour Routing Protocol for LLN) (2, 3) et un noeud racine 4 ayant une vue globale sur ces noeuds RPL. Le noeud racine 4 comporte une première table, dite table d'association, destinée à mémoriser des associations entre chaque noeud RPL et au moins un noeud hôte (6, 8) d'un groupe multicast. Le noeud hôte pouvant être soit la source soit le destinataire des paquets de données échangés à travers le réseau.

Dans la suite de la description, des références identiques désigneront des éléments remplissant des fonctions identiques dans les différentes figures. On désignera un noeud hôte source 6 de paquets de données par le terme «source», et un noeud hôte destinataire 8 de paquets de données par le terme « récepteur».

Pour plus de clarté, le réseau LLN auquel il sera fait référence dans la suite de cette description comporte seulement deux noeuds en portée directe des noeud hôtes (6, 8). Cependant le procédé selon l'invention s'applique également dans le cas où le réseau comporte plus que deux noeuds RPL.

La configuration d'un noeud RPL (2, 3) est réalisée par échange de messages de configuration MER_Request/MER_Reply entre le noeud racine 4 et chaque noeud RPL ayant demandé de servir de routeur RPL multicast pour ledit noeud hôte (6, 8).

Le noeud RPL élu est appelée routeur multicast du bord du réseau ou MER (Multicast Edge Routeur en anglais) pour une source ou un récepteur.

Dans le cas où le noeud hôte est une source, le MER sera en charge d'intercepter des paquets multicast de la source et de les transmettre dans l'arbre de diffusion multicast RPL.

Dans le cas où le noeud hôte est un récepteur, le MER sera en charge d'intercepter les requêtes d'adhésion multicast de ce récepteur, telle que par exemple une requête de type MLD report (pour Multicast Listener Discovery décrite dans |R. Vida et al. « Multicast Listener Discovery Version 2 (MLDv2) for IPv6 », RFC 3610, June 2004]) et de déclencher la création d'une branche de routage multicast dans le réseau RPL pour ce groupe.

Dans un mode particulier de réalisation de l'invention, l'échange des messages MER_Request/MER_Reply est implémenté à travers une extension de l'échange DAO/DAO_ACK du protocole RPL. Le message DAO (*Destination Avertissement Object*) du protocole RPL est traditionnellement utilisé par les noeuds RPL pour ajouter ou supprimer une branche (un chemin IP) du réseau RPL. Le message DAO_ACK est envoyé du noeud racine 4 vers le noeud RPL 8 en réponse à un message DAO.

Notons que chaque noeud RPL est configuré pour mémoriser un statut qui peut avoir l'une des trois valeurs possibles:
▪ MER: le noeud RPL est un routeur MER pour une source ou un destinataire donné ;
▪ NON_MER : le noeud RPL n'est pas un routeur MER pour une source ou un destinataire donné;
▪ PENDING: le noeud RPL a envoyé une demande de statut MER au noeud racine 4 (MER_Request) et est en attente d'une réponse (MER_Reply) du noeud racine 4.

Le statut d'un noeud RPL 2, 3 vis-à-vis d'un noeud hôte est inscrit dans une entrée d'une deuxième table d'association qui contiendra en outre les champs suivants:
▪ *Adresse de l'hôte:* adresse IP d'une source ou d'un récepteur multicast ;
▪ *Type de l'hôte:* champ optionnel spécifiant le type de l'hôte, ou le type peut être « source » ou « récepteur » ;
▪ *Adresse Multicast:* champ optionnel spécifiant l'adresse du groupe multicast associé à la source ou au récepteur ;
▪ *Lifetime*/*durée de vie:* durée de vie de l'entrée associée à l'hôte;
▪ *Statut:* PENDING, MER, ou NON_MER,

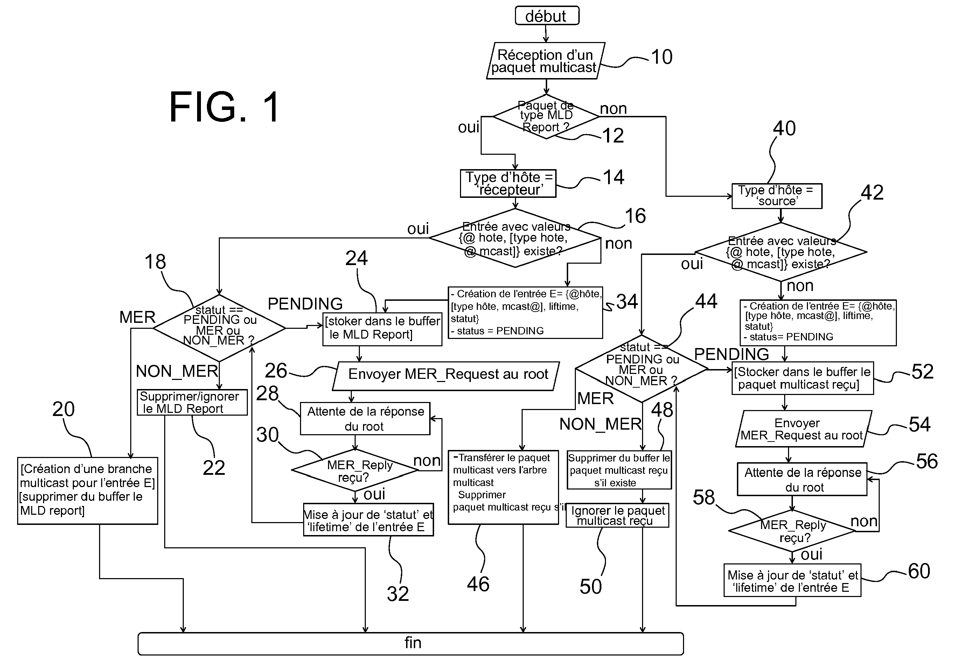

La figure 1 illustre les étapes de la procédure de sélection d'un MER exécutées au niveau d'un noeud RPL (2, 3) en portée radio directe d'une source 6 ou d'un récepteur 8 dans le réseau LLN recevant un paquet de données multicast émis par la source 6 ou une requête d'adhésion à un groupe multicast provenant du récepteur 8. Dans l'exemple décrit ci-après, les champs optionnels [type de l'hôte] et [adresse multicast] sont utilisés.

A l'étape 10, le noeud RPL (2, 3) reçoit le paquet multicast comportant des données utiles ou une requête d'adhésion à un groupe multicast (p.ex. via un message MLD). A l'étape 12, le noeud RPL (2, 3) vérifie si le paquet reçu est une requête d'adhésion à un groupe multicast (p.ex. un message du type MLD (Multicast Listener Discovery) Report ou non).

Dans le cas où le paquet reçu est une requête d'adhésion à un groupe multicast de type MLD Report par exemple), à l'étape 14, le noeud RPL (2, 3) construit un triplé {Adresse de l'hôte, Type de l'hôte, Adresse multicast} comprenant l'adresse du noeud hôte (6) indiquée dans le paquet reçu (c.à.d. l'adresse du noeud hôte source du paquet), en affectant la valeur *'récepteur'* au champ 'Type de l'hôte' et en affectant l'adresse multicast contenue dans la requête d'adhésion au champ 'Adresse multicast'. A l'étape 16 le noeud RPL (2, 3) vérifie si une entrée avec les mêmes valeurs *Adresse de l'hôte, Type de l'hôte, et Adresse Multicast* que celles dérivées à partir du paquet reçu existe déjà dans la deuxième table d'association.

Dans l'affirmative, l'étape 18, consiste à déterminer à partir de la deuxième table d'association le statut du noeud RPL vis-à-vis du noeud hôte identifié dans le message (requête d'adhésion MLD) reçu.

Si le noeud RPL (2, 3) a un statut MER, l'étape 20 consiste à créer une branche de routage multicast en direction dudit noeud RPL (2, 3) pour l'entrée trouvée (c.à.d. pour l'adresse multicast correspondante) si une telle branche n'existe pas déjà et à supprimer le message d'adhésion au groupe multicast (p.ex. MLD Report) reçu de la mémoire du noeud RPL (2, 3).

Si le noeud RPL (2, 3) a un statut NON_MER, le message d'adhésion au groupe multicast (p.ex. MLD Report) est ignoré, puis supprimé (étape 22) de la mémoire du noeud RPL (2, 3).

Si le noeud RPL a un statut PENDING, l'étape 24 consiste à stocker le message d'adhésion au groupe multicast (p.ex. MLD Report) reçu dans la mémoire du noeud RPL (2, 3).

A l'étape 26, le noeud RPL (2, 3) transmet un message MER_Request au noeud racine 4, et attend la réponse MER_Reply (étapes 28-30).

Après réception d'un message MER_Reply du noeud racine 4, le statut du noeud RPL (2, 3) et la durée de vie de ce statut sont mis à jour à l'étape 32.

Si aucune entrée avec les mêmes valeurs *Adresse de l'hôte, Type de l'hôte, et Adresse Multicast* que celles dérivées à partir du paquet reçu n'existe dans la table d'association, à l'étape 34, une entrée est créé avec l'*Adresse de l'hôte, le Type de l'hôte, et l'Adresse Multicast* dérivés à partir du paquet reçu, un statut PENDING pour le noeud RPL (2, 3) vis-à-vis de l'hôte et une durée de vie de ce statut.

Le procédé se poursuit avec les étapes 24 à 32.

Dans le cas où le paquet multicast reçu n'est pas une requête d'adhésion à un groupe multicast (par exemple le paquet n'est pas un message du type MLD Report) mais est un paquet multicast de données, à l'étape 40, le noeud RPL construit un triplet {Adresse de l'hôte, Type de l'hôte, Adresse multicast} comprenant l'adresse du noeud hôte (8) indiquée dans le paquet reçu (c.à.d. l'adresse source du paquet), en affectant la valeur *'sources'* au champ 'type de l'hôte' et en affectant l'adresse multicast indiquée dans le paquet (c.à.d. l'adresse multicast de destination du paquet) au champ Adresse multicast'. A l'étape 42, le noeud RPL (2, 3) vérifie si une entrée avec les mêmes valeurs *Adresse de l'hôte, Type de l'hôte, et Adresse Multicast* que celles dérivées à partir du paquet reçu existe déjà dans la table d'association.

Dans l'affirmative, l'étape 44, consiste à déterminer le statut du noeud RPL vis-à-vis du noeud hôte identifié dans le message reçu à partir de la deuxième table d'association.

Si le noeud RPL a un statut MER, l'étape 46 consiste à transférer le paquet reçu vers l'arbre multicast et à supprimer le paquet multicast reçu de la mémoire du noeud RPL s'il y existe.

Si le noeud RPL a un statut NON_MER, le paquet multicast est supprimé (étape 48) de la mémoire du noeud RPL s'il y existe.

Si le noeud RPL a un statut PENDING, l'étape 52 consiste à stocker le paquet multicast reçu dans la mémoire du noeud RPL. A l'étape 54, le noeud RPL (2, 3) transmet un message MER_Request au noeud racine 4, et attend la réponse MER_Reply (étapes 56-58).

Après réception d'un message MER_Reply du noeud racine 4, le statut du noeud RPL (2, 3) est mis à jour à l'étape 60.

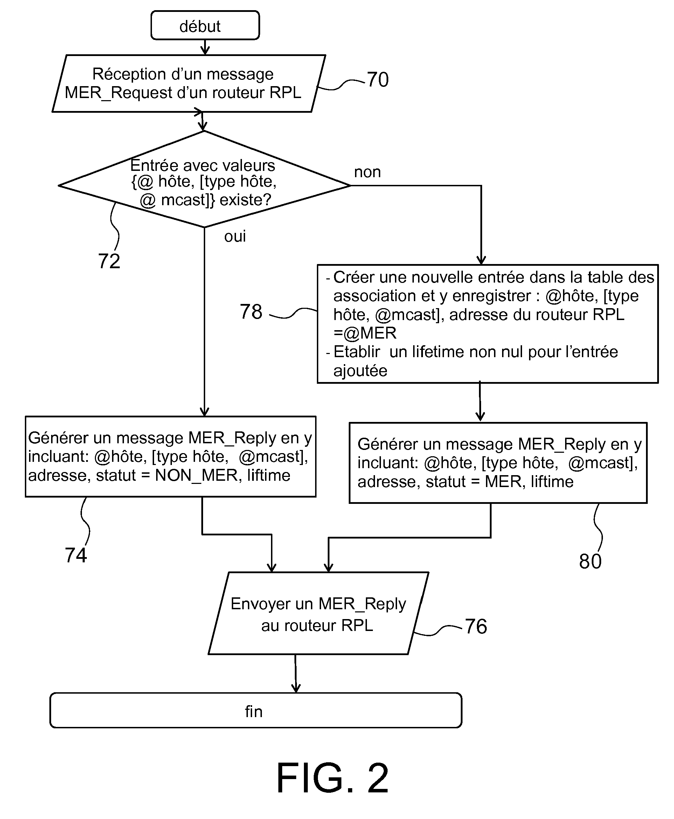

La figure 2 illustre les étapes de la procédure de sélection d'un MER exécutées au niveau du noeud racine 4 suite à la réception d'un message MER_Request à partir d'un noeud RPL (2, 3).

A l'étape 70, le noeud racine 4 reçoit un message MER_Request à partir d'un noeud RPL (2, 3).

A l'étape 72, le noeud racine 4 consulte la première table d'association pour vérifier si une entrée pour le même message MER_Request existe déjà dans cette table. La vérification se base sur la comparaison des champs (adresse de l'hôte, type de l'hôte, adresse multicast) de la première table d'association avec ceux mentionnés dans le message MER_Request reçu. Si une entrée existe déjà dans la première table, le noeud racine 4 génère (étape 74) un message MER_Reply en y incluant l'adresse de l'hôte @hôte, le type de l'hôte « type_hôte », l'adresse multicast « mcast@ », et une durée de vie égale à la durée de vie restante de l'entrée trouvée. Le noeud racine 4 inclus également dans le message MER_Reply un statut qui est fonction de l'adresse de l'initiateur du message MER_Request et de l'adresse du routeur MER indiquée dans l'entrée trouvée. Si l'initiateur du message MER_Request n'est pas celui enregistré dans l'entrée trouvée, le noeud racine 4 indique un champ statut mis à NON_MER dans le message MER_Reply. Si l'initiateur du message MER_Request est le même que celui enregistré dans l'entrée trouvée, le noeud racine 4 indique un champ statut mis à MER dans le message MER_Reply. A l'étape 76, le message MER_Reply est ensuite envoyé au noeud RPL (2, 3).

Si le message MER_Request reçu par le noeud racine 4 est nouveau, c'est à dire, si les champs dudit message n'ont pas encore été enregistrés dans la première table d'association, le noeud racine 4 ajoute une nouvelle entrée (étape 78) dans ladite première table d'association comprenant les valeurs indiquées pour les champs du message MER_Request, c'est-dire, l'adresse de l'hôte et optionnellement le type de l'hôte et l'adresse multicast. Le noeud racine 4 fixe aussi la durée de vie de l'entrée ajoutée à une valeur non nulle et indique dans cette entrée l'adresse du routeur RPL (2, 3) ayant envoyé le message MER_Request comme étant l'adresse du routeur multicast sélectionné par le noeud racine 4 (c'est-à-dire le Multicast Edge Router / MER) pour ledit noeud hôte (6, 8).

A l'étape 80 le noeud racine 4 génère ensuite un message MER_Reply (par exemple un message DAO ACK si le noeud RPL a envoyé un MER_Request sous la forme d'un message DAO) et envoie ce message au noeud RPL source du MER_Request (étape 76). Le message MER_Reply contient les mêmes informations que celles mentionnées dans le message MER_Request reçu avec en plus un champ statut mis à MER et un champ durée de vie égale à la durée de vie restante de l'entrée créée.

Par ailleurs, si une durée de vie d'une entrée dans la table d'association arrive à expiration, le noeud racine 4 supprime l'entrée concernée de la première table d'association.

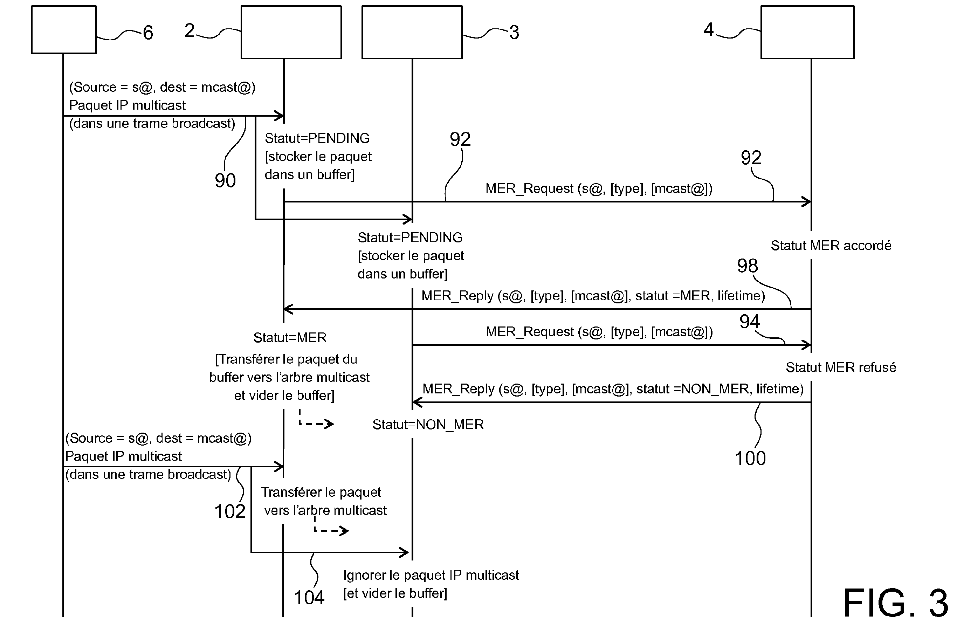

La figure 3 illustre la séquence d'échange de messages entre deux noeuds RPL, 2 et 3, et le noeud racine 4 pour configurer un noeud RPL pour la source 6.

A l'étape 90, la source 6 diffuse un paquet de données multicast comportant, outre les données utiles, un entête indiquant l'adresse de la source @S et l'adresse multicast mcast@ du groupe auquel appartient le(s) noeud(s) destinataire(s) du paquet de données.

A la réception du paquet diffusé, chacun des noeuds RPL 2 et 3 enregistre dans sa deuxième table d'association une entrée contenant l'adresse de la source 6 (@S) et optionnellement le type de l'hôte ('source') et l'adresse du groupe multicast (mcast@) si une telle entrée n'existe pas déjà, et met son statut à PENDING ainsi qu'une durée de vie non nulle de cette entrée dans ladite table.

Chacun des noeuds RPL 2, 3 génère ensuite un message MER_Request, par exemple un message DAO, comportant un champ dédié à l'adresse de la source @S, un champ optionnel dédié au type de l'hôte [type d'hôte = source] et un dernier champ optionnel dédié à l'adresse multicast du groupe mcast@ et envoie (étapes 92 et 94) le message MER_Request au noeud racine 4.

Dans ce cas, chaque noeud RPL 2, 3 peut, si sa mémoire disponible le lui permet, stocker le paquet multicast reçu de la source 6 en attendant la réponse MER_Reply du noeud racine 4.

A l'étape 98, le noeud racine 4 envoie au noeud RPL 2 un message MER_Reply comportant les mêmes informations que celles mentionnées dans le message MER_Request reçu de ce noeud RPL 2 avec en plus un champ statut mis à MER et un champ lifetime indiquant la durée de vie de ce noeud RPL 2 dans ce statut.

A la réception du message MER_Reply, le noeud RPL 2 met son statut à MER dans sa deuxième table d'association, transfère le paquet de données vers l'arbre multicast, et vide sa mémoire.

Parallèlement, à l'étape 100, le noeud racine 4 envoie au noeud RPL 3 un message MER_Reply comportant les mêmes informations que celles mentionnées dans le message MER_Request reçu de ce noeud RPL 3 avec en plus un champ statut mis à NON_MER et un champ lifetime indiquant la durée de vie de ce noeud RPL3 dans ce statut.

A la réception du message MER_Reply, le noeud RPL 3 met son statut à NON_MER dans sa deuxième table d'association.

Lorsque le noeud RPL 2 reçoit ultérieurement un nouveau paquet multicast de la source 4 (étape 102), il re-route (étape 102) automatiquement le paquet de données reçu vers l'arbre multicast.

Et lorsque le noeud RPL 3 reçoit ultérieurement un nouveau paquet de la source 4 (étape 104), il ignore ce paquet et vide sa mémoire.

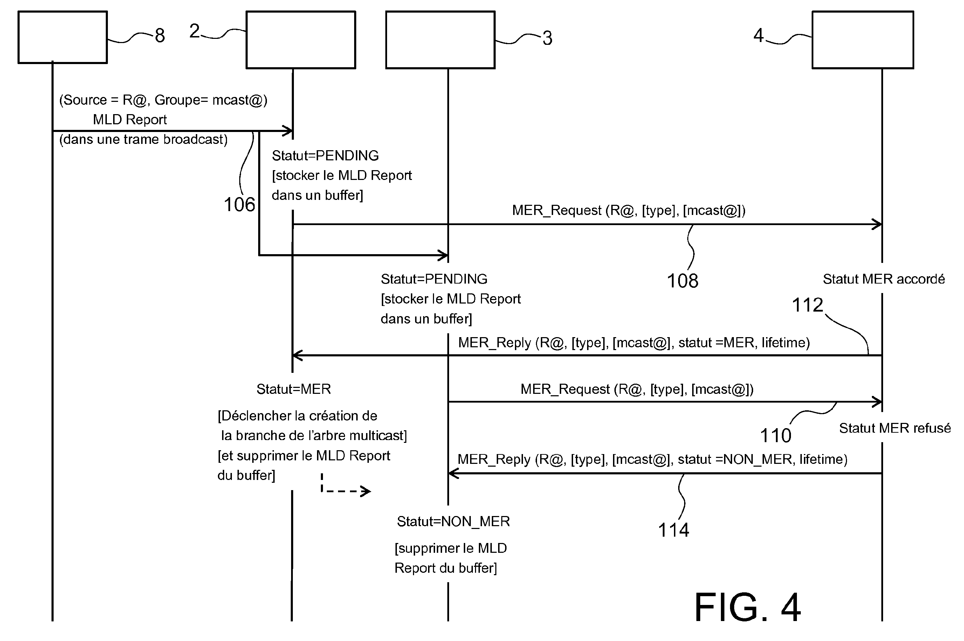

La figure 4 illustre la séquence d'échange de messages entre les deux noeuds RPL, 2 et 3, et le noeud racine 4 pour la sélection d'un noeud RPL routeur pour le récepteur 8.

A l'étape 106, la récepteur 8 diffuse une requête d'adhésion à un groupe multicast (p.ex. un message de type MLD report (Multicast Listener Discovery)) comportant, un entête indiquant l'adresse du récepteur @R (c.à.d. l'adresse source de la requête d'adhésion) et l'adresse multicast mcast@ du groupe auquel souhaite adhérer ledit récepteur 8.

A la réception de la requête d'adhésion au groupe multicast, chacun des noeuds RPL 2 et 3 enregistre dans sa deuxième table d'association l'adresse de l'hôte 8 et optionnellement le type de l'hôte (récepteur) ainsi que l'adresse multicast que l'hôte souhaite joindre, met le champ statut à PENDING dans ladite deuxième table d'association et configure le champ lifetime avec une durée de vie non nulle. Chaque noeud RPL 2, 3 mémorise la requête d'adhésion (p.ex. le message MLD Report) reçu si sa mémoire disponible le lui permet.

Chacun des noeuds RPL 2, 3 génère ensuite un message MER_Request (par exemple un message DAO) contenant un champ dédié à l'adresse de l'hôte, un champ optionnel dédié au type de l'hôte (type d'hôte = récepteur) et un dernier champ optionnel dédié à l'adresse multicast mcast@ du groupe, et envoie (étapes 108 et 110) le message MER_Request au noeud racine 4.

A l'étape 112, le noeud racine 4 envoie au noeud RPL 2 un message MER_Reply comportant les mêmes informations que celles mentionnées dans le message MER_Request reçu de ce noeud RPL 2 avec en plus un champ statut mis à MER et un champ lifetime indiquant la durée de vie de ce statut pour le noeud RPL2.

A la réception du message MER_Reply, le noeud RPL 2 met son statut à MER dans sa deuxième table d'association, déclenche la création de la branche de l'arbre multicast, et supprime le message MLD de sa mémoire.

Parallèlement, à l'étape 114, le noeud racine 4 envoie au noeud RPL 3 un message MER_Reply comportant les mêmes informations que celles mentionnées dans le message MER_Request reçu de ce noeud RPL 3 avec en plus un champ statut mis à NON_MER et un champ lifetime indiquant la durée de vie de ce statut pour le noeud RPL3.

A la réception du message MER_Reply, le noeud RPL 3 met son statut à NON_MER dans sa deuxième table d'association et supprime le message MLD de sa mémoire.

Le procédé selon l'invention s'applique à la fois dans le contexte des réseaux informatiques/télécom à faible ressources (*Low power and Lossy Networks* : LLNs), par exemple les réseaux de capteurs sans fils (*Wireless Sensor Networks*), ainsi que dans les réseaux de télécommunications IP multicast grâce à :
- la définition d'un mécanisme d'échange de messages dans le réseau (p.ex. dans un réseau RPL) entre un ensemble de routeurs multicast et un noeud racine ; l'échange permettant au noeud racine de désigner un routeur multicast pour servir une source multicast ou un récepteur multicast (c.à.d. accepter/transférer un paquet multicast venant d'une source multicast ou envoyer un paquet multicast vers un récepteur multicast);
- La définition d'une première table d'association dans le noeud racine et d'une deuxième table d'association dans chaque noeud routeur (p.ex. routeur RPL) qui associent un routeur multicast sélectionné (MER) avec un ou plusieurs groupes multicast ainsi qu'un ou plusieurs sources et/ou récepteurs, et
- La définition de fonctionnalités de gestion desdites tables d'association (ajout/suppression d'entrées dans la table d'association) au niveau du noeud racine et des noeuds routeurs.
- La définition des fonctionnalités spécifiant les conditions de sélection d'un routeur multicast (MER) au niveau du noeud racine;
- La définition des fonctionnalités spécifiant les conditions de sélection d'un routeur multicast (MER) au niveau des routeurs multicast.

Il est important de noter que la présente invention s'applique quel que soit le mode de routage du trafic multicast utilisé dans le réseau RPL; qu'il s'agisse en particulier du mode dit « multicast storing» tel que défini par la spécification RPL ou encore du mode dit « multicast non-storing » défini dans [C.Janneteau, M. Kellil, BD12830 « Procédé de routage d'un flux en mode non-stockage », demande de brevet français déposée le 11 juillet 2011 sous le n° 1156273].

## Revendications

1. Procédé de sélection d'un noeud routeur dans un réseau de télécommunications de type LLN, pour Low Power and Lossy Netwroks, comportant :
- une pluralité de noeuds (2,3) susceptibles d'agir comme routeurs de paquets de données en provenance ou à destination d'au moins un noeud hôte (6, 8) appartenant à un groupe de noeuds multicast susceptibles d'émettre et/ou de recevoir des paquets de données à travers ledit réseau,
- un noeud racine (4) comportant une première table destinée à mémoriser des associations entre au moins un noeud routeur (2,3) et au moins un noeud hôte (6,8),
procédé **caractérisé par** les étapes suivantes:
- à la réception par un noeud routeur (2,3) d'un paquet de données multicast provenant d'un noeud hôte (6) ou d'une requête d'adhésion à un groupe multicast provenant d'un noeud hôte (8), ledit noeud routeur (2,3) transmet au noeud racine (4) une requête MER_Request, pour Multicast Edge Router Request, de configuration en tant que noeud routeur multicast pour servir ledit noeud hôte, et,
- à la réception de la requête MER_Request, le noeud racine (4) détermine à partir de ladite première table d'association une configuration du noeud routeur (2,3) et,
- transmet audit noeud routeur (2,3) un message de réponse MER_Reply comportant la configuration déterminée, ladite configuration du noeud routeur (2,3) consistant à lui attribuer l'un des statuts suivants:
• MER, Multicast Edge Router, indiquant que le noeud routeur (2,3) est configuré en tant qu'unique routeur multicast pour le noeud hôte (6,8),
• NON_MER: indiquant que le noeud routeur (2,3) n'est pas configuré en tant que routeur multicast pour le noeud hôte (6,8).

2. procédé selon la revendication 1 **caractérisé en outre en ce que** ladite requête MER_Request comportant l'adresse dudit noeud hôte (6,8), et ledit message de réponse MER_Reply comporte l'adresse dudit noeud hôte (6, 8), et une durée de la configuration déterminée pour le noeud routeur (2,3) vis-à-vis du noeud hôte source (6, 8), et Optionnellement, l'adresse du groupe multicast auquel est associé ledit noeud hôte.

3. Procédé selon la revendication 1 comportant en outre une étape consistant à configurer dans chaque noeud routeur (2,3) une deuxième table d'association comportant les informations suivantes :
▪ adresse du noeud hôte source (6) du paquet de données ou du noeud hôte source (8) d'une requête d'adhésion à un groupe multicast reçu par le noeud routeur (2,3);
▪ un statut du noeud routeur (2,3) vis-à-vis dudit noeud hôte (6, 8) parmi l'un des statuts PENDING, MER, ou NON_MER.
▪ une durée de vie du statut du noeud routeur (2,3) vis-à-vis du noeud hôte (6, 8).

4. Procédé selon la revendication 3 dans lequel la deuxième table d'association comporte en outre le type du noeud hôte (6, 8) indiquant si ledit noeud hôte (6, 8) est source (6) ou destinataire (8) des paquets de données reçus par le noeud routeur (2,3).

5. Procédé selon la revendication 3 dans lequel la deuxième table d'association comporte en outre l'adresse du groupe multicast auquel est associé le noeud hôte (6, 8);

6. Procédé selon la revendication 4 dans lequel, lorsque le noeud hôte (6) est source des paquets de données reçus par le noeud routeur (2,3) ayant un statut MER vis-à-vis dudit noeud hôte (6), le noeud routeur (2, 3) intercepte tous les paquets multicast émis par ledit noeud hôte (6) et les re-route dans le réseau, et lorsque le noeud hôte (8) est destinataire des paquets de données reçus par le noeud routeur (2,3), ce dernier intercepte la requête d'adhésion à un groupe multicast émises par ledit noeud hôte (8) et déclenche la création d'une branche de routage multicast dans ledit réseau pour ledit groupe multicast.

7. Procédé selon la revendication 3 comportant en outre une étape de gestion de ladite deuxième table d'association dans laquelle, à la réception par le noeud routeur (2,3) d'un paquet de données comportant une adresse d'un nouveau noeud hôte source (6) de paquets de données, ledit noeud routeur (2,3) :
- enregistre dans ladite deuxième table d'association l'adresse dudit nouveau noeud hôte source (6), une valeur PENDING pour le statut du noeud routeur (2,3) vis-à-vis de ce nouveau noeud hôte source (6), et une valeur non nulle pour la durée de vie du statut du noeud routeur vis-à-vis du nouveau noeud hôte source (6),
- génère un message MER_Request comportant l'adresse du nouveau noeud hôte source (6), et optionnellement l'adresse du groupe multicast auquel est associé ce nouveau noeud hôte source (6),
- transmet le message MER_Request généré au noeud racine (4).

8. Procédé selon la revendication 3 comportant en outre une étape de gestion de ladite deuxième table d'association dans laquelle, à la réception par le noeud routeur (2, 3) d'une requête d'adhésion à un groupe multicast émise par un nouveau noeud hôte (8), ledit noeud routeur (2,3) :
- enregistre dans ladite deuxième table d'association l'adresse du nouveau noeud hôte destinataire (8), une valeur PENDING pour le statut dudit noeud routeur (2,3) vis-à-vis dudit nouveau noeud hôte destinataire (8) et une valeur non nulle pour la durée de vie du statut du noeud routeur (2,3) vis-à-vis du nouveau noeud hôte destinataire (8),
- génère un message MER_Request comportant l'adresse du nouveau noeud hôte destinataire (8) et optionnellement l'adresse du groupe multicast auquel ce nouveau noeud hôte destinataire (8) souhaite s'inscrire,
- transmet le message MER_Request généré au noeud racine (4).

9. Procédé selon la revendication 7 ou la revendication 8 dans lequel le noeud routeur (2,3) stocke le paquet de données reçu ou la requête d'adhésion reçue en attendant une réponse MER_Reply du noeud racine (4).

10. Procédé selon la revendication 9 dans lequel, à la réception par le noeud routeur (2,3) d'un message de réponse MER_Reply comportant un statut NON_MER, ledit noeud routeur (2,3):
- vérifie s'il existe dans la deuxième table d'assoc-ation un noeud hôte (6,8) concerné par le message de réponse MER_Reply reçu;
- Si oui, met son statut vis-à-vis du noeud hôte concerné à NON_MER, et,
- remplace la valeur de la durée de vie de son statut vis-à-vis du noeud hôte (6,8) concerné par celle indiquée dans le message MER_Reply reçu.

11. Procédé selon la revendication 10 dans lequel, si le noeud hôte (6) concerné par le message MER_Reply est source du paquet de données reçu par le noeud routeur (2,3), ce dernier supprime de sa mémoire les paquets de données préalablement stockés pendant la phase d'attente de la réponse MER_Reply, et si ledit noeud hôte (8) est destinataire du paquet de données reçu par le noeud routeur (2,3), ce dernier supprime le message reçu du noeud destinataire préalablement stocké.

12. Procédé selon la revendication 9 dans lequel, à la réception par le noeud routeur (2,3) d'un message de réponse MER_Reply comportant un statut MER ledit noeud routeur :
- vérifie s'il existe dans la deuxième table d'association un noeud hôte (6,8) concerné par le MER_Reply reçu,
- Si oui, ledit noeud routeur (2,3) met son statut vis-à-vis du noeud hôte concerné à MER, et,
- remplace la durée de vie de son statut vis-à-vis du noeud hôte (6,8) concerné par celle indiquée dans le message MER_Reply reçu.

13. Procédé selon la revendication 12 dans lequel, si le noeud hôte (6) concerné par le message MER_Reply est source du paquet de données reçu par le noeud routeur (2,3), ce dernier re-route lesdits paquets à'travers le réseau, et si ledit noeud hôte est destinataire (8) desdits paquets, le noeud routeur (2,3) établit une branche multicast dans le réseau allant vers ledit noeud hôte (8).

14. Procédé selon la revendication 9 dans lequel, si aucun noeud hôtes (6,8) de la deuxième table d'association n'est concerné par le message de réponse MER_Reply transmis par le noeud racine (4), ledit noeud routeur (2,3) ignore le message reçu du noeud racine (4).

15. Procédé selon l'une des revendications 10 ou 13 dans lequel le noeud routeur (2,3) supprime de la deuxième table d'association son statut vis-à-vis d'un noeud hôte (6,8) lorsque la durée de vie de ce statut expire.

16. Procédé selon l'une des revendications 7 ou 8 comportant une étape de gestion de ladite première table d'association dans laquelle, à la réception par le noeud racine (4) du message MER_Request, ledit noeud racine (4) vérifie si le message reçu correspond à une entrée préalablement mémorisée dans la première table d'association et, si le message provient d'un noeud routeur (2,3) différent de celui qui est inscrit pour ladite entrée, le noeud racine (4) envoie audit noeud routeur (2,3) un message MER_Reply comportant les mêmes informations que celles mentionnées dans le message MER_Request reçu avec un statut NON_MER pour ce routeur (2,3) vis-à-vis du noeud hôte (6, 8) mentionné dans le message reçu, et la durée de vie restante de ladite entrée.

17. Procédé selon l'une des revendications 7 ou 8 comportant une étape de gestion de ladite première table d'association dans laquelle, à la réception par le noeud racine (4) du message MER_Request, ledit noeud racine (4) vérifie si le message reçu correspond à une entrée préalablement mémorisée dans la première table d'association, et si aucune entrée dans ladite première table d' association ne correspond aux informations mentionnées dans le message MER_Request reçu par le noeud racine (4), ledit noeud racine (4) ajoute une nouvelle entrée dans ladite première table d'association comportant outre les informations contenues dans le message MER_Request, une durée de vie non nulle pour l'entrée ajoutée, et un statut MER du noeud routeur (2,3) vis-à-vis du noeud hôte (4) mentionné dans le message reçu.

18. Procédé selon l'une quelconque des revendications 1 à 17 dans lequel ledit réseau de télécommunication est du type LLN, Low Power and Lossy Network.

19. Dispositif de sélection d'un noeud routeur dans un réseau de télécommunications de type LLN, pour Low power and Lossy Networks, comportant :
- une pluralité de noeuds routeurs (2, 3) susceptibles d'agir comme routeurs de paquets de données en provenance ou à destination d'au moins un noeud hôte (6,8) appartenant à un groupe multicast susceptible d'émettre et/ou de recevoir des paquets de données à travers ledit réseau,
- un noeud racine (4) comportant une première table d'association destinée à mémoriser des associations entre au moins un noeud routeur (2,3) et au moins un noeud hôte (6, 8) du groupe multicast, dispositif **caractérisé en ce que** :
- chaque noeud routeur (2,3) est apte à transmettre au noeud racine (4) une requête MER_Request, pour Multicast Edge Router Request, de configuration en tant que noeud routeur, et, **en ce que**,
- le noeud racine (4) est apte à déterminer à partir de ladite première table d'association une configuration du noeud routeur (2, 3), et à transmettre audit noeud routeur (2, 3) un message de réponse MER_Reply comportant la configuration déterminée, ladite configuration du noeud routeur (2,3) consistant à lui attribuer l'un des statuts suivants:
• MER, Multicast Edge Router, indiquant que le noeud routeur (2,3) est configuré en tant qu'unique routeur multicast pour le noeud hôte (4),
• NON_MER: indiquant que le noeud routeur (2,3) n`est pas configuré en tant que routeur multicast pour le noeud hôte (4).

20. Programme d'ordinateur mémorisé sur un support d'enregistrement et comportant des instructions pour réaliser les étapes du procédé selon l'une des revendications 1 à 18 lorsqu'il est exécuté sur un ordinateur.

## Patentansprüche

1. Verfahren zum Auswählen eines Router-Knotens in einem Telekommunikationsnetzwerk vom Typ LLN für Low Power and Lossy Networks, umfassend:
- eine Mehrzahl von Knoten (2, 3), welche geeignet sind, als Router für Pakete von Daten zu dienen, welche von wenigstens einem Host-Knoten (6, 8) stammen oder ihn als Ziel haben, welcher einer Gruppe von Multicast-Knoten zugehörig ist, welche geeignet sind, Pakete von Daten durch das Netzwerk zu senden oder/und zu empfangen,
- einen Wurzel-Knoten (4), welcher eine erste Tabelle umfasst, welche dazu vorgesehen ist, Zuordnungen zwischen wenigstens einem Router-Knoten (2, 3) und wenigstens einem Host-Knoten (6, 8) zu speichern,
das Verfahren **gekennzeichnet durch** die folgenden Schritte:
- beim Empfang eines von einem Host-Knoten (6) stammenden Multicast-Datenpakets oder einer von einem Host-Knoten (8) stammenden Beitrittsanfrage zu einer Multicast-Gruppe **durch** einen Router-Knoten (2, 3) überträgt der Router-Knoten (2, 3) eine Konfigurations-Anfrage MER_Request, für Multicast Edge Router Request, als Multicast-Router-Knoten um dem Host-Knoten zu dienen an den Wurzelknoten (4), und
- beim Empfang der Anfrage MER_Request bestimmt der Wurzel-Knoten (4) ausgehend von der ersten Zuordnungstabelle eine Konfiguration des Router-Knotens (2, 3), und
- überträgt an den Router-Knoten (2, 3) eine Antwort-Nachricht MER_Reply, welche die bestimmte Konfiguration umfasst, wobei die Konfiguration des Router-Knotens (2, 3) daraus besteht, ihm einen der folgenden Status zuzuweisen:
- MER, Multicast Edge Router, welcher anzeigt, dass der Router-Knoten (2, 3) als ein einzelner Multicast-Router für den Host-Knoten (6, 8) eingerichtet ist,
- NON_MER: welcher anzeigt, dass der Router-Knoten (2, 3) nicht als Multicast-Router für den Host-Knoten (6, 8) eingerichtet ist.

2. Verfahren nach Anspruch 1, **dadurch gekennzeichnet, dass** die MER_Request-Anfrage die Adresse des Host-Knotens (6, 8) umfasst und die Antwort-Nachricht MER_Reply die Adresse des Host-Knotens (6, 8) umfasst, und eine Dauer der von dem Router-Knoten (2, 3) gegenüber dem Quellen-Host-Knoten (6, 8) bestimmten Konfiguration, und optional die Adresse der Multicast-Gruppe, welcher der Host-Knoten zugeordnet wird.

3. Verfahren nach Anspruch 1, ferner umfassend einen Schritt, welcher aus einem Konfigurieren einer zweiten Zuordnungstabelle in jedem Router-Knoten (2, 3) besteht, welche die folgenden Informationen umfasst:
- die Adresse des Quellen-Host-Knotens (6) des Datenpakets oder des Quellen-Host-Knotens (8) einer Beitrittsanfrage zu einer Multicast-Gruppe, welche von dem Router-Knoten (2, 3) empfangen wird;
- einen Status des Router-Knotens (2, 3) gegenüber dem Host-Knoten (6, 8) aus einem der Status PENDING, MER oder NON_MER;
- eine Lebensdauer des Status des Router-Knotens (2, 3) gegenüber dem Host-Knoten (6, 8).

4. Verfahren nach Anspruch 3, wobei die zweite Zuordnungstabelle ferner den Typ des Host-Knotens (6, 8) umfasst, welcher anzeigt, ob der Host-Knoten (6, 8) Quelle (6) oder Ziel (8) der von dem Router-Knoten (2, 3) empfangenen Datenpakete ist.

5. Verfahren nach Anspruch 3, wobei die zweite Zuordnungstabelle ferner die Adresse der Multicast-Gruppe umfasst, welcher der Host-Knoten (6, 8) zugeordnet wird.

6. Verfahren nach Anspruch 4, wobei wenn der Host-Knoten (6) Quelle der von dem Router-Knoten (2, 3) empfangenen Datenpakete ist, welcher einen Status MER gegenüber dem Host-Knoten (6) aufweist, der Router-Knoten (2, 3) alle von dem Host-Knoten (6) ausgegebenen Multicast-Pakete abfängt und sie in dem Netzwerk umleitet, und wenn der Host-Knoten (8) Ziel der von dem Router-Knoten (2, 3) empfangenen Datenpakete ist, letzterer die von dem Host-Knoten (8) ausgegebene Beitrittsanfrage zu einer Multicast-Gruppe abfängt und die Erzeugung eines Multicast-Routing-Zweigs in dem Netzwerk für die Multicast-Gruppe auslöst.

7. Verfahren nach Anspruch 3, ferner umfassend einen Schritt eines Verwaltens der zweiten Zuordnungstabelle, in welchem beim Empfang eines Datenpakets durch den Router-Knoten (2, 3), welches eine Adresse eines neuen Quellen-Host-Knotens (6) von Datenpaketen umfasst, der Router-Knoten (2, 3):
- in der zweiten Zuordnungstabelle die Adresse des neuen Quellen-Host-Knotens (6), einen Wert PENDING für den Status des Router-Knotens (2, 3) gegenüber dem neuen Quellen-Host-Knoten (6) und einen Wert ungleich null für die Lebensdauer des Status des Router-Knotens gegenüber dem neuen Quellen-Host-Knoten (6) einträgt,
- eine Nachricht MER_Request erzeugt, welche die Adresse des neuen Quellen-Host-Knotens (6) und optional die Adresse der Multicast-Gruppe umfasst, zu welcher der neue Quellen-Host-Knoten (6) zugeordnet wird,
- die erzeugte Nachricht MER_Request zu dem Wurzel-Knoten (4) überträgt.

8. Verfahren nach Anspruch 3, ferner umfassend einen Schritt eines Verwaltens der zweiten Zuordnungstabelle, in welchem beim Empfang einer von einem neuen Host-Knoten (8) ausgegebenen Beitrittsanfrage zu einer Multicast-Gruppe durch den Router-Knoten (2, 3), der Router-Knoten (2, 3):
- in der zweiten Zuordnungstabelle die Adresse des neuen Ziel-Host-Knotens (8), einen Wert PENDING für den Status des Router-Knotens (2, 3) gegenüber dem neuen Ziel-Host-Knoten (8) und einen Wert ungleich null für die Lebensdauer des Status des Router-Knotens (2, 3) gegenüber dem neuen Ziel-Host-Knoten (8) einträgt,
- eine Nachricht MER_Request erzeugt, welche die Adresse des neuen Ziel-Host-Knotens (8) und optional die Adresse der Multicast-Gruppe umfasst, zu welcher der neue Ziel-Host-Knoten (8) beizutreten wünscht,
- die erzeugte Nachricht MER_Request zu dem Wurzel-Knoten (4) überträgt.

9. Verfahren nach Anspruch 7 oder Anspruch 8, wobei der Router-Knoten (2, 3) die empfangenen Datenpakete oder die empfangene Beitrittsanfrage während eines Wartens auf eine Antwort MER_Reply von dem Wurzel-Knoten (4) speichert.

10. Verfahren nach Anspruch 9, wobei beim Empfang einer Antwort-Nachricht MER_Reply durch den Router-Knoten (2, 3), welche einen Status NON_MER umfasst, der Router-Knoten (2, 3):
- verifiziert, ob in der zweiten Zuordnungstabelle ein Host-Knoten (6, 8) existiert, der von der empfangenen Antwort-Nachricht MER_Reply betroffen ist;
- falls ja, seinen Status gegenüber dem betroffenen Host-Knoten auf NON_MER setzt, und
- den Wert der Lebensdauer seines Status gegenüber dem betroffenen Host-Knoten (6, 8) durch denjenigen ersetzt, der in der empfangenen Nachricht MER_Reply angezeigt wird.

11. Verfahren nach Anspruch 10, wobei, wenn der von der Nachricht MER_Reply betroffene Host-Knoten (6) Quelle des von dem Router-Knoten (2, 3) empfangenen Datenpakets ist, letzterer die zuvor während der Wartephase auf die Antwort MER_Reply gespeicherten Datenpakete aus seinem Speicher löscht, und wenn der Host-Knoten (8) Ziel des von dem Router-Knoten (2, 3) empfangenen Datenpakets ist, letzterer die zuvor gespeicherte von dem Ziel-Knoten empfangene Nachricht löscht.

12. Verfahren nach Anspruch 9, wobei beim Empfang einer Antwort-Nachricht MER_Reply durch den Router-Knoten (2, 3), welche einen Status MER umfasst, der Router-Knoten:
- verifiziert, ob in der zweiten Zuordnungstabelle ein Host-Knoten (6, 8) existiert, welcher von der MER_Reply betroffen ist,
- falls ja, der Router-Knoten (2, 3) seinen Status gegenüber dem betroffenen Host-Knoten auf MER setzt, und
- die Lebensdauer seines Status gegenüber dem betroffenen Host-Knoten (6, 8) durch denjenigen ersetzt, welcher in der empfangenen Nachricht MER_Reply angezeigt ist.

13. Verfahren nach Anspruch 12, wobei, wenn der von der Nachricht MER_Reply betroffene Host-Knoten (6) Quelle des von dem Router-Knoten (2, 3) empfangenen Datenpakets ist, letzterer die Pakete durch das Netzwerk umleitet, und wenn der Host-Knoten Ziel (8) der Pakete ist, der Router-Knoten (2, 3) einen Multicast-Zweig in dem Netzwerk aufbaut, welcher zu dem Host-Knoten (8) verläuft.

14. Verfahren nach Anspruch 9, wobei, wenn kein Host-Knoten (6, 8) der zweiten Zuordnungstabelle von der durch den Wurzel-Knoten (4) übertragenen Antwort-Nachricht MER_Reply betroffen ist, der Router-Knoten (2, 3) die von dem Wurzel-Knoten (4) empfangene Nachricht ignoriert.

15. Verfahren nach einem der Ansprüche 10 oder 13, wobei der Router-Knoten (2, 3) seinen Status gegenüber einem Host-Knoten (6, 8) aus der zweiten Zuordnungstabelle löscht, wenn die Lebensdauer dieses Status ausläuft.

16. Verfahren nach einem der Ansprüche 7 oder 8, umfassend einen Schritt eines Verwaltens der ersten Zuordnungstabelle, in welchem beim Empfang der Nachricht MER_Request durch den Wurzel-Knoten (4) der Wurzel-Knoten (4) verifiziert, ob die empfangene Nachricht einem zuvor gespeicherten Eintrag in der ersten Zuordnungstabelle entspricht, und wenn die Nachricht von einem Router-Knoten (2, 3), welcher verschieden ist von demjenigen, welcher für den Eintrag eingetragen ist, stammt, der Wurzel-Knoten (4) an den Router-Knoten (2, 3) eine Nachricht MER_Reply schickt, welche die gleichen Informationen umfasst, wie diejenigen, die in der empfangenen Nachricht MER_Request erwähnt werden, mit einem Status NON_MER für diesen Router (2, 3) gegenüber dem Host-Knoten (6, 8), welcher in der empfangenen Nachricht erwähnt wird, und der verbleibenden Lebensdauer des Eintrags.

17. Verfahren nach einem der Ansprüche 7 oder 8, umfassend einen Schritt eines Verwaltens der ersten Zuordnungstabelle, in welchem beim Empfang der Nachricht MER_Request durch den Wurzel-Knoten (4) der Wurzel-Knoten (4) verifiziert, ob die empfangene Nachricht einem zuvor gespeicherten Eintrag in der ersten Zuordnungstabelle entspricht, und wenn kein Eintrag in der ersten Zuordnungstabelle den in der Nachricht MER_Request, welche von dem Wurzel-Knoten (4) empfangen wird, erwähnten Informationen entspricht, der Wurzel-Knoten (4) einen neuen Eintrag in die erste Zuordnungstabelle einfügt, welcher neben den in der Nachricht MER_Request enthaltenen Informationen eine Lebensdauer ungleich null für den angefügten Eintrag und einen Status MER des Router-Knotens (2, 3) gegenüber dem Host-Knoten (4) umfasst, welcher in der empfangenen Nachricht erwähnt wird.

18. Verfahren nach einem der Ansprüche 1 bis 17, wobei das Telekommunikationsnetzwerk vom Typ LLN, Low Power and Lossy Network, ist.

19. Auswahlvorrichtung für einen Router-Knoten in einem Telekommunikationsnetzwerk vom Typ LLN, für Low Power and Lossy Networks, umfassend:
- eine Mehrzahl von Router-Knoten (2, 3), welche dazu geeignet sind, als Router für von wenigstens einem Host-Knoten (6, 8) stammende oder an ihn gerichtete Datenpakete zu dienen, welcher zu einer Multicast-Gruppe zugehörig ist, welche geeignet ist, Datenpakete durch das Netzwerk zu übertragen oder/und zu empfangen,
- einen Wurzel-Knoten (4), welcher eine erste Zuordnungstabelle umfasst, welche dazu eingerichtet ist, Zuordnungen zwischen wenigstens einem Router-Knoten (2, 3) und wenigstens einem Host-Knoten (6, 8) der Multicast-Gruppe zu speichern, wobei die Vorrichtung **dadurch gekennzeichnet ist, dass**:
- jeder Router-Knoten (2, 3) in der Lage ist, an den Wurzel-Knoten (4) eine Anfrage MER-Request, für Multicast Edge Router Request, zur Konfiguration als Router-Knoten zu übertragen, und dass
- der Wurzel-Knoten (4) in der Lage ist, ausgehend von der ersten Zuordnungstabelle eine Konfiguration des Router-Knotens (2, 3) zu bestimmen, und an den Router-Knoten (2, 3) eine Antwort-Nachricht MER_Reply zu übertragen, welche die bestimmte Konfiguration umfasst, wobei die Konfiguration des Router-Knotens (2, 3) daraus besteht, ihm einen der folgenden Status zuzuordnen:
- MER, Multicast Edge Router, welcher anzeigt, dass der Router-Knoten (2, 3) als einziger Multicast-Router für den Host-Knoten (4) eingerichtet ist,
- NON_MER, welcher anzeigt, dass der Router-Knoten (2, 3) nicht als Multicast-Router für den Host-Knoten (4) eingerichtet ist.

20. Computerprogramm, welches auf einem Speichermedium gespeichert ist und Anweisungen zum Durchführen der Verfahrensschritte nach einem der Ansprüche 1 bis 18 umfasst, wenn es von einem Computer ausgeführt wird.

## Claims

1. A method for selecting a router node in a LLN (Low power and Lossy Networks)-type telecommunication network including:
- a plurality of nodes (2, 3) likely to act as data packet routers from or to at least one host node (6, 8) belonging to a group of multicast nodes likely to transmit and/or receive data packets through said network,
- a root node (4) including a first table for storing associations between at least one router node (2, 3) and at least one host node (6, 8),
which method is **characterised by** the following steps:
- upon receipt by a router node (2, 3) of a multicast data packet from a host node (6) or a adherence request to a multicast group from a host node (8), said router node (2, 3) transmits to the root node (4) a MER_Request (Multicast Edge Router Request) request of configuration as a multicast router node to serve said host node, and,
- upon receipt of the MER_Request request, the root node (4) determines, from said first association table a configuration of the router node (2, 3) and,
- transmits to said router node (2, 3) a MER_Reply reply message including the determined configuration, said configuration of the router node (2, 3) consisting in assigning to it one of the following statuses:
- MER (Multicast Edge Router): indicating that the router node (2, 3) is configured as a single multicast router for the host node (6, 8),
- NON_MER: indicating that the router node (2, 3) is not configured as a multicast router for the host node (6, 8).

2. The method according to claim 1, further **characterised in that** said MER_Request request including the address of said host node (6, 8), and said MER_Reply reply message includes the address of said host node (6, 8), and a duration of the configuration determined for the router node (2, 3) relative to the source host node (6, 8), and optionally, the address of the multicast group with which said host node is associated.

3. The method according to claim 1, further including a step of configuring, in each router node (2, 3), a second association table including the following information:
- the address of the source host node (6) of the data packet or of the source host node (8) of a adherence request to a multicast group received by the router node (2, 3);
- a status of the router node (2, 3) relative to said host node (6, 8) among one of the statuses PENDING, MER, or NON_MER.
- a lifetime of the status of the router node (2, 3) relative to the host node (6, 8).

4. The method according to claim 3, wherein the second association table further includes the type of the host node (6, 8) indicating whether said host node (6, 8) is a source (6) or a destination (8) of the data packets received by the router node (2, 3).

5. The method according to claim 3, wherein the second association table further includes the address of the multicast group with which the host node (6, 8) is associated.

6. The method according to claim 4 wherein, when the host node (6) is a source of the data packets received by the router node (2, 3) having a MER status relative to said host node (6), the router node (2, 3) intercepts all the multicast packets transmitted by said host node (6) and re-routes them into the network, and when the host node (8) is a destination of the data packets received by the router node (2, 3), the latter intercepts the adherence request to a multicast group transmitted by said host node (8) and triggers the creation of a multicast routing branch in said network for said multicast group.

7. The method according to claim 3, further including a step of managing said second association table wherein, upon receipt by the router node (2, 3) of a data packet including an address of a new source host node (6) of data packets, said router node (2, 3):
- records in said second association table the address of said new source host node (6), a PENDING value for the status of the router node (2, 3) relative to this new source host node (6), and a non-zero value for the lifetime of the status of the router node relative to the new source host node (6),
- generates a MER_Request message including the address of the new source host node (6), and optionally the address of the multicast group with which this new source host node (6) is associated,
- transmits the MER_Request message generated to the root node (4).

8. The method according to claim 3, further including a step of managing said second association table wherein, upon receipt by the router node (2, 3) of a adherence request to a multicast group transmitted by a new host node (8), said router node (2, 3):
- records in said second association table the address of the new destination host node (8), a PENDING value for the status of said router node (2, 3) relative to said new destination host node (8) and a non-zero value for the lifetime of the status of the router node (2, 3) relative to the new destination host node (8),
- generates a MER_Request message including the address of the new destination host node (8) and optionally the address of the multicast group to which this new destination host node (8) intends to register,
- transmits the MER_Request message generated to the root node (4).

9. The method according to claim 7 or claim 8, wherein the router node (2, 3) stores the data packet received or the adherence request received while waiting for a MER_Reply reply from the root node (4).

10. The method according to claim 9 wherein, upon receipt by the router node (2, 3) of a MER_Reply reply message including a NON_MER status, said router node (2, 3):
- checks whether there is, in the second association table, a host node (6, 8) concerned by the MER_Reply reply message received;
- if yes, sets its status relative to the host node concerned to NON_MER, and
- replaces the value of the lifetime of its status relative to the host node (6, 8) concerned with that indicated in the MER_Reply message received.

11. The method according to claim 10 wherein, if the host node (6) concerned by the MER_Reply message is a source of the data packet received by the router node (2, 3), the latter removes from its memory the data packets stored beforehand during the waiting phase of the MER_Reply reply, and if said host node (8) is a destination of the data packet received by the router node (2, 3), the latter removes the message received from the destination node stored beforehand.

12. The method according to claim 9 wherein, upon receipt by the router node (2, 3) of a MER_Reply reply message including a MER status, said router node:
- checks whether there is, in the second association table, a host node (6, 8) concerned by the MER_Reply received,
- if yes, said router node (2, 3) sets its status relative to the host node concerned to MER, and
- replaces the lifetime of its status relative to the host node (6, 8) concerned with that indicated in the MER_Reply message received.

13. The method according to claim 12 wherein, if the host node (6) concerned by the MER_Reply message is a source of the data packet received by the router node (2, 3), the latter re-routes said packets trough the network, and if said host node is a destination (8) of said packets, the router node (2, 3) sets up a multicast branch in the network going to said host node (8).

14. The method according to claim 9 wherein, if no host node (6, 8) of the second association table is concerned by the MER_Reply reply message transmitted by the root node (4), said router node (2, 3) ignores the message received from the root node (4).

15. The method according to one of claims 10 or 13 wherein the router node (2, 3) removes from the second association table its status relative to a host node (6, 8) when the lifetime of this status expires.

16. The method according to one of claims 7 or 8, including a step of managing said first association table wherein, upon receipt by the root node (4) of the MER_Request message, said root node (4) checks whether the message received corresponds to an entry stored beforehand in the first association table and, if the message comes from a router node (2, 3) different from that which is registered for said entry, the root node (4) sends to said router node (2, 3) a MER_Reply message including the same information as that mentioned in the MER_Request message received with a NON_MER status for this router (2, 3) relative to the host node (6, 8) mentioned in the message received, and the remaining lifetime of said entry.

17. The method according to one of claims 7 or 8, including a step of managing said first association table wherein, upon receipt by the root node (4) of the MER_Request message, said root node (4) checks whether the message received corresponds to an entry stored beforehand in the first association table, and if no entry in said first association table corresponds to the information mentioned in the MER_Request message received by the root node (4), said root node (4) adds a new entry in said first association table including, besides the information contained in the MER_Request message, a non-zero lifetime for the entry added, and a MER status of the router node (2, 3) relative to the host node (4) mentioned in the message received.

18. The method according to any of claims 1 to 17, wherein said telecommunication network is of the LLN (Low power and Lossy Network)-type.

19. A device for selecting a router node in a LLN (Low power and Lossy Networks)-type telecommunication network including:
- a plurality of router nodes (2, 3) likely to act as data packet routers from or to at least one host node (6, 8) belonging to a multicast group likely to transmit and/or receive data packets through said network,
- a root node (4) including a first association table for storing associations between at least one router node (2, 3) and at least one host node (6, 8) of the multicast group, which device is **characterised in that**:
- each router node (2, 3) is able to transmit to the root node (4) a MER_Request (Multicast Edge Router Request) request of configuration as a router node, and **in that**
- the root node (4) is able to determine from said first association table a configuration of the router node (2, 3), and transmit to said router node (2, 3) a MER_Reply reply message including the determined configuration, said configuration of the router node (2, 3) consisting in assigning to it one of the following statuses:
- MER (Multicast Edge Router): indicating that the router node (2, 3) is configured as a single multicast router for the host node (4),
- NON_MER: indicating that the router node (2, 3) is not configured as a multicast router for the host node (6, 8).

20. A computer program stored on a recording medium and including instructions for carrying out the steps of the method according to one of claims 1 to 18, when run on a computer.
